# EUROPEAN PATENT APPLICATION

(11) **EP 1 690 664 A1**
(43) Date of publication of application: **16.08.2006**
(21) Application number: 04818567.2
(22) Date of filing: 15.11.2004
(51) Int. Cl.: B29C 45/14, B29C 45/73, B29K 105/20

(54) **RESIN COATING METHOD, INSERT MOLDING, AND RESIN COATED METAL GEARS**

(30) Priority: 14.11.2003 JP 2003385994
(71) Applicant: Ogura Clutch Co., Ltd., Kiryu-shi, Gunma 376-0011 (JP); SUNAGA PLASTIC MFRG. CO., LTD., Ohta-shi, Gunma 373-0861 (JP); KOMOTO, Tadashi, Kiryu-shi, Gunma 376-0011 (JP); KUMEHARA, Hiroyuki, Ashikaga-shi, Tochigi 326-0826 (JP)
(72) Inventor: KOMOTO, Tadashi, Kiryu-shi, Gunma 376-0011 (JP); KUMEHARA, Hiroyuki, Ashikaga-shi, Tochigi 326-0826 (JP); FUJIKAKE, Mamoru, Ogura Clutch Co., Ltd., Kiryu-shi, Gunma 376-0011 (JP); NOZAWA, Jyunichi, Ogura Clutch Co., Ltd., Kiryu-shi, Gunma 376-0011 (JP)
(74) Representative: Hall, Matthew Benjamin
(86) International application number: PCT/JP2004/017312
(87) International publication number: WO 2005/046957

(57) **Abstract**

An insert molding method comprising an insert molding step of separately preheating an insert member and a mold, and injecting a molten resin; a step of holding a molding in the mold; and a step of gradually cooling at room temperature after taking the molding form the mold is provided. This method realizes a molding free from resin crack and having excellent environmental resistance. Thus, an insert molding method having high general-purpose properties and excellent prevention of resin crack and close contact properties, and a molding using the method are provided.

Further, a method of coating a metal gear surface with a resin by injection molding a molten resin in a state that metal gears and a mold for molding are separately heated to the respective predetermined temperature, and a novel technical means that can realize resin-coated gears free from resin crack and the like even during use under non-lubrication even after molding, and having excellent strength, rigidity, accuracy, impact resistance, fatigue resistance, noise reducing properties, and wear resistance are provided.

## Description

### Technical Field

The present invention relates to a resin coating method of metals, ceramics, and the like, and an insert molding or resin-coated metal gears, obtained by the method.

### Background Art

An insert molding method is one of molding methods for imparting the characteristics such as impact resistance possessed by a resin to the characteristics of metals or ceramics, in various fields such as automobile parts, electric and electronic parts, and the like. However, in such an insert molding, where temperature difference is large between an insert member and a molten resin, there was the problem that cracks or breaking fractures are liable to occur in the insert molding due to temperature change just after molding or during use of the molding. Further, there was the problem that a resin layer is liable to peel in the molding due to difference in chemical properties between the insert member and the resin.

To solve those problems, various methods are hitherto proposed for the purpose of preventing resin crack of the insert molding. For example, a method of using a mold covered with a heat-insulating layer is proposed (Patent Document 1). However, this method has advantages and disadvantages depending on the kind or size of the insert member, and thus had the problem.

Further, a method of heating a mold is proposed (Patent Document 2). However, it is necessary to set up a different temperature of the mold depending on the portion of the insert member in order to decrease residual stress after molding. Thus, there is the problem that this molding method is effective to a specific insert member, but has the limited use.

Further, a method of heating the portion of mold cavity with a gas or a liquid (Patent Document 3) is one method to attempt solving the above problems. However, there is the problem that the insert member and the mold cannot separately be preheated to the respective predetermined temperature.

Further, a coating method of coating a metal member with a resin powder by a spray method or a fluidized immersion method, and then baking the coating at a melting temperature or higher of the resin used, thereby generating no resin crack is proposed (Patent Document 4). However, there is the problem in the point of productivity that the step requires long time.

As a method of preventing peeling between a metal plate and a coating film, for example, a method of providing a ceramic coat layer comprising a composite molding of a ceramic powder and a thermosetting binder resin on a metal plate, and then insert molding a thermoplastic resin is disclosed (Patent Document 5). However, there is the problem that formation of the ceramic coat layer requires many steps and much time. Further, the resin is a thermoplastic elastomer having a low melting temperature in a range that an injection pouring temperature is from 170 to 200°C, and showing flexible properties at room temperature. Because of this, prevention of crack of a heat-resistant resin after molding cannot be solved by only this molding method.

Patent Document 1: JP-A-7-178765

Patent Document 2: JP-A-2000-9270

**Patent Document 3: JP-A-11-105076**

Patent Document 4: JP-A-8-239599

Patent Document 5: JP-A-2003-94554

Under the above situations, the present inventors made detailed investigations on structure change of a resin in an insert molding step from academic and technical standpoints. As a result, the following finding is obtained. That is, in the case of general-purpose resins or reaction molding resins, having relatively low melting point or softening point, it is possible to obtain a molding having no crack by merely heating one of an insert part or a mold. On the other hand, in the case of engineering resins having high melting point or softening point, in an insert molding step, the resin solidifies in a cooling course from a melt fluidized state at high temperature to solidification, while involving complicated structure changes such as orientation of a molten polymer chain by fluidizing, lowering of polymer chain mobility, orientation crystallization, and relaxation phenomenon of a strained amorphous chain. This is the cause that structural strain remains in the resin of the molding. This structural strain makes a resin change into further stable structure by, for example, temperature change during use of the molding, resulting in generation of cracks. Therefore, to prevent cracks of the resin after molding, an amorphous chain must be avoided from solidification in an oriented state. Further, when a crystalline resin is quenched in a molding step, the resin solidifies without being sufficiently crystallized. It is considered that in such a structure, crystallization of the resin proceeds at a temperature lower than the melting point by temperature change during use, and this brings about generation of a structural strain, resulting in the cause of generation of cracks. Thus, in an insert molding involving complicated structural change, the conventional technique that does not separately determine temperatures of an insert member and a mold cannot control a resin structure in the molding.

Further, where the insert member has its smooth surface or a material to be coated has different chemical properties like a resin, adhesive properties or close contact properties at the interface between those deteriorate, resulting in the cause of resin crack. In addition, for example, where the insert molding is used under the environment such as in water or in hot water, the conventional technique of merely preheating the insert member or the mold has the problem that adhesive properties or close contact properties between the insert member and the resin deteriorate.

Further, the above-described Patent Document 3 discloses a formation method of an engineering resin having a heat distortion temperature higher than 150°C. However, the heating and cooling test of the molding, and the test in hot water are not conducted, and thus there is the problems in use temperature range and use atmosphere of the molding.

Accordingly, the present invention has an object to solve the problems in the prior art, and provide a novel technical measure that can conduct insert molding without causing cracks or peeling in the molding, and an insert molding.

Further, metal gears have the problems of not only wear resistance, but noise due to friction or impact shock, without a lubricant. Further, from the demand of reduction in weight, gears made of a resin are developed particularly in the field of small-sized gears, and at present, are utilized in automobile parts, audio-video equipment parts, office automation equipment parts, and other many parts.

However, gears made of a resin has excellent in productivity and the degree of freedom in shape, but has the problem in poor strength, rigidity and accuracy, as compared with metal gears. Specifically, the resin most widely used as small-sized gears is a polyacetal, but breakage of tooth (strength of tooth root), wear of gear tooth surface, noises and the like give rise to the problems to be solved (Non-Patent Document 1).

Breakage of tooth greatly depends on bending stress (strength) of a resin, and this is due to temperature dependency of dynamic (mechanical) properties of a resin. For example, it is said that the bending stress of a polyacetal copolymer at 80°C is about 1/2 of the bending stress thereof at 20°C. Thus, where resin temperature rises by friction of gear tooth surface, this is a fatal problem in gears made of the polyacetal copolymer. As a method for solving this problem, heat-resistant resins such as a polyphenylene sulfide (PPS), a polyimide (PI), a polyamideimide (PAI), and a polyether ether ketone (PEEK); fiber-reinforced products of those; solid lubricant-added products of those; and further, thermosetting resins are investigated. However, molded gears prepared from those resins have advantages and disadvantages from the standpoints of molding properties, solid physical properties, friction and wear properties, costs and the like (Non-Patent Document 1).

Gears have the action to transmit power, and also transmit a rotation angle to another intermeshing gear. Regarding the transmission properties of the rotation angle, bending rigidity of a resin is about 1/7 or lower as compared with a metal. Therefore, to realize transmission with high accuracy, it is necessary to solve the problem on improvement of rigidity of resin gears.

Regarding wear of tooth surface, there is the problem that it brings about shape change that tooth becomes thinner, and an abrasion powder generated causes reduction in performance and function of a gear. As a means to solve this problem, the countermeasures of addition of lubricants, addition of solid lubricants, polymer alloying, and the like are taken.

Further, from that noises of gear depend on elastic modulus of a resin material, abrasion coefficient, gear shape accuracy, impact relaxation, damping properties, and the like, countermeasures of addition of a thermoplastic elastomer, grease lubrication, preparation of smooth sliding surface, and the like are taken respectively.

Further, almost all of materials of resin-made gears produced by injection molding are a crystalline polymer. Therefore, friction and wear properties of the molding resin gears greatly depend on crystallinity, crystal structure, and the like in a molding (gear). As described before, it is said that the resin gear is seemingly excellent in productivity and the degree of freedom of shape. However, when a molten resin of high temperature is injected in a mold of low temperature in injection molding, the molten resin injected to a tooth portion has a fast rate cooled from a mold surface of low temperature, and as a result, the resin at the tooth portion solidifies without sufficiently crystallizing. That is, the resin at the tooth portion has low crystallinity. On the other hand, in the vicinity of tooth root and the inside of the resin gear, surface area of a mold contacting with a resin is small as compared with the tooth portion. Therefore, the resin is gradually cooled, so that crystallization is liable to proceed. For this reason, in a resin gear made of a crystalline polymer, even though a portion apart from the gear tooth surface has high crystallinity, the tooth portion mostly affecting friction and wear is liable to have low crystallinity. Thus, the conventional resin-made gears had the problem that crystallinity differs depending on the site of a gear, and this heterogeneity of structure induces reduction of performances such as rigidity, wear resistance, and the like, of the resin-made gear.

In the combination of a metal gear and a resin gear, the resin gear is a flexible material as compared with the metal gear. As a result, the tooth is greatly distorted due to force by rotation of the gear, this distortion causes delay of rotation of the metal gear, and wear of tooth of the resin gear is accelerated by a tooth tip angle of the metal gear. As a method of decreasing this distortion, a gear having a steel reinforcing bone inserted in a core portion of a nylon tooth was developed (Non-Patent Document 2). The gear is obtained by that a steel member having a shape near a gear and having a structure that planar reinforcing bones project over the circumference is dipped in a melt containing ε-caprolactam, a catalyst and an initiator to polymerize (MC: monomer cast nylon 6), MC nylon 6 is covered around the steel member, and thereafter excess resin on the periphery of the reinforcing bone is removed by a hob cutter. However, the resin coating of a metal gear by this method requires long time to produce one gear, and from the point of productivity, it is known that MC nylon obtained by this polymerization method has a low molecular weight, and therefore has low rigidity. From those, the method has problem on the point of physical properties of a material, and is not practical.

For the purpose of reduction in unfavorable sounds such as tooth intermeshing sound of mutual metal gears, vibration sound, and the like, gears having various resin layers interposed between a core pipe made of a metal and a peripheral metal-made gear are proposed (Patent Documents 6 and 7). However, there is the problem that intermeshing teeth are all made of a metal, requiring a lubricant, and therefore cannot be used under non-lubrication.

Further, a method of injection molding a molten resin on the entire circumference of tooth portion of gear-shaped core of a worm wheel of a worm gear, and thereafter subjecting to mechanical processing with a hob cutter, and finishing in a worm wheel shape is proposed (Patent Document 8). In this method, however, the molten resin is directly quenched and solidified in a fluidized state on the surface of a tooth surface of a core having low temperature. Therefore, crystallization of a resin does not proceed sufficiently, resulting in forming a low crystalline, oriented molding having structural strain. After molding, in the course of cutting and removing excess resin with a hob cutter, or in operating a worm gear after that, there is high possibility of destruction (crack or peeling) of a resin due to temperature change or mechanical stress. Thus, there was the problem on performance of a worm wheel. Further, the amount of a resin removed with a hob cutter is far larger than the amount of a resin coated on the tooth surface of a worm wheel, and the resin removed has various properties greatly reduced. Therefore, there was the problem to reutilize such a resin to an injection molding. Therefore, if the resin coating that is satisfied with the function is possible, the amount of resin can be reduced due to unnecessity of removal with a hob cutter, and the effect can be achieved in reduction of total energy in environmental resistance.

It was said that a resin material has the advantage to have productivity and the degree of freedom of shape. However, as described above, where a molten resin of high temperature is applied to the metal member surface of room temperature by injection molding, the resin is quenched under a fluidized sate on the metal member surface, and therefore, solidification occurs in low crystallization and also in an oriented state. As a result, the defect was overlooked that in the course of cooling after molding, cracks or the like of the coating resin are liable to occur by temperature change and the like during use of a coating member.

Conventionally, gears having both the characteristics such as high strength, high rigidity, high accuracy and the like possessed by the metal gear and the characteristics such as self-lubricating properties, noise reducing properties and the like possessed by the resin gear have earnestly been desired. However, it is not too much to say that because the above problems were not recognized, gears utilizing the respective advantages of the metal gear and the resin gear were not realized.

Non-Patent Document 1: Newest Molding Plastic Gear Technology -Step of these 10 years-, The Japan Society For Precision Engineering, Molding Plastic Gear Research and Expert Committee (2002)

Non-Patent Document 2: Naohisa Tsukada, Design Technology of Plastic Gears for Power Transmission, Gihodo Shuppan Co. (1987)

**Patent Document 6: JP-B-6-60674**

Patent Document 7: JP-A-2003-343696

Patent Document 8: JP-A-2002-21980

Patent Document 9: JP-A-2003-385994

From the above background, the present invention has the object to overcome the conventional problems, and to provide a method of applying a resin to a surface of a metal gear by injection molding the molten resin under the state of heating metal gears and a mold for molding to the respective predetermined temperatures, and a novel technical means that can realize resin-coated metal gears having excellent strength, rigidity, accuracy, impact resistance, fatigue resistance, noise reducing properties and wear resistance, without causing resin crack and the like even after molding or during use under non-lubrication.

### Disclosure of the Invention

As the means to solve the above problems, a first invention provides a resin coating method of an inert member, comprising a preheating step of heating the insert member to a predetermined temperature within a range of from 40°C to a melt injection temperature of the resin and a mold for insert molding to a predetermined temperature within a range of from 40°C to (melt injection temperature of the resin - 50°C); an insert molding step of injecting a molten resin in a state that the preheated insert member is positioned in the preheated mold for insert molding; a holding step of holding a molding in the mold; and a cooling step of taking the insert molding out of the mold, and gradually cooling the same to room temperature.

A second invention provides the resin coating method, wherein the insert member is at least one selected from metals, ceramics or their composite members, and a third invention provides the resin coating method, wherein the resin is a thermoplastic resin, and is at least one selected from the group of a homopolymer, a copolymer, a polymer blend, a polymer alloy, and a composite material comprising a polymer as a main component.

A fourth invention provides the resin coating method, wherein the resin applied to the surface of the insert member has a thickness in a range of from 5 µm to 30 mm.

A fifth invention provides the resin coating method, wherein the insert member is previously surface-treated with at least one selected from a polishing treatment, an etching treatment, a shot blast treatment and a silane-coupling treatment.

A sixth invention provides an insert molding which is a molding obtained by any one of the above resin coating methods, wherein the molding does not generate resin crack in an air atmosphere of a temperature range of from -40°C to 200°C, and a seventh invention provides an insert molding which is a molding obtained by any one of the above resin coating methods, wherein the molding does not generate resin crack or resin peeling in water of a temperature range of from 0°C to 100°C.

An eighth invention provides a resin coating method of metal gears which is a method of applying a resin to a surface of the metal gears, the method comprising a preheating step of heating the metal gears to a predetermined temperature within a range of from 40°C to a melt injection temperature of the resin and a mold for molding to a predetermined temperature within a range of from 40°C to (melt injection temperature of the resin - 50°C); a molding step of injecting a molten resin in a state that the preheated metal gears are positioned in the preheated mold; a holding step of holding a molding in the mold; and a cooling step of taking the molding out of the mold, and gradually cooling the same to room temperature.

A ninth invention provides the resin coating method of metal gears, wherein the metal gears are a metal gear for transmitting power and/or angle of rotation, or metal splines and serration, for transmitting power.

A tenth invention provides the resin coating method, wherein the metal gears are at least one selected from steel, iron, copper, aluminum, titanium, or alloys containing those, or their composite members.

An eleventh invention provides the resin coating method, wherein the resin is a thermoplastic resin, and is at least one selected from the group of a homopolymer, a copolymer, a polymer blend, a polymer alloy, and a composite material comprising a polymer as a main component.

A twelfth invention provides the resin coating method, wherein the resin applied to the surface of the insert member has a thickness in a range of from 5 µm to 30 mm, and can be molded in an optional thickness at each site of gear surface.

A thirteenth invention provides the resin coating method, wherein the metal gears are previously surface-treated with at least one selected from a polishing treatment, an etching treatment, a shot blast treatment, a roulette processing and a silane-coupling treatment.

A fourteenth invention provides a resin-coated metal gear which is a molding obtained by the above resin coating method, wherein the molding is free from orientation of resin after molding, and has suppressed resin crack and resin peeling.

A fifteenth invention provides resin-coated metal gears comprising two gears constituting a pair of gears that transmit power and/or angle of rotation by contact rotating tooth portions thereof, wherein all tooth surfaces of the two gears comprise a molding obtained by the above resin coating method, or all tooth surfaces (tooth contact sites) of one gear comprises a molding obtained by the above resin coating method, and another gear intermeshing with the one gear is a non-resin-coated metal gear.

A sixteenth invention provides resin-coated metal gears obtained by the above resin coating method, wherein when part of tooth surface is coated with a resin, tooth surface of another gear contacting and intermeshing with non-resin-coated tooth surface of the gear is coated with a resin.

A seventeenth invention provides resin-coated metal gears obtained by the above resin coating method, having impact resistance far superior to that of a resin-made gear.

An eighteenth invention provides resin-coated metal gears obtained by the above resin coating method, having fatigue resistance far superior to that of a resin-made gear.

A nineteenth invention provides resin-coated metal gears obtained by the above resin coating method, having lubricating properties and wear resistance far superior to those of a combination of two metal gears when used under non-lubrication in the above combination of gears.

A twentieth invention provides resin-coated metal gears obtained by the above resin coating method, having excellent noise reducing properties such that noises due to contact of the gears at the tooth surface thereof is greatly reduced than noises due to contact of metal gears at the tooth surface thereof, in the case of using in the above combination of gears.

### Brief Description of the Drawings

Fig. 1 is a schematic view illustrating a part of the periphery with respect to the resin-coated metal gear of the invention.
Fig. 2 is a schematic view illustrating a part of the periphery of the inner driver with respect to the resin-coated metal spline of the invention.
Fig. 3 is a transmission electron micrograph (low magnification image) of the coating resin layer of the resin-coated metal gear.
Fig. 4 is a transmission electron micrograph (high magnification image) of the coating resin layer of the resin-coated metal gear.
Fig. 5 is a gear test apparatus having the resin-coated metal gears of the invention incorporated therein.

The reference numerals in the drawings are as follows.
1: Motor
2: Torque meter
3: Driving gear
4: Driven gear
5: Torque meter
6: Gear pump
7: Relief valve
**8: Hydraulic oil tank**

### Best Mode for Carrying Out the Invention

The invention has the characteristics as described above, and its embodiment is described in detail below.

### (A) Resin Coating of Insert Member

In the invention, the insert member applied to resin coating means a solid which imparts the characteristics of a resin to the surface of members used in various fields, such as automobile parts, electric and electronic parts, and sanitary goods, by coating the members with the resin, thereby fixing the members in the resin, or coating a part of the member with the resin.

Such an insert member is not particularly limited in its kind and composition, and examples thereof include solids containing at least one selected from metal-made members, such as aluminum, iron, nickel, copper, lead, zinc, titanium, steel, stainless steel, cast iron, aluminum alloy, magnesium alloy, titanium alloy, nickel alloy, zinc alloy, and amorphous alloy; and ceramics-made members, such as alumina, silica, zirconia, magnesia, silicon nitride, silicon carbide, boron nitride, and aluminum nitride. Of those, aluminum and steel are exemplified as the preferred examples.

The form (shape) of the insert member is not particularly limited so long as it is a solid excluding a powder and particles, and may be any molding of powder or particles, and any of sheet form, plate form, curved surface form, cylindrical form, porous form, and the like, that can be placed on a predetermined position in a mold.

The resin coating method of those insert members of the invention is that the insert member is preheated to a predetermined temperature within a temperature range of from 40°C to the melt injection temperature of the resin, and the mold for insert molding is preheated to a predetermined temperature within a temperature range of from 40°C to (melt injection temperature of resin - 50°C), individually.

The reason that the preheating temperature is 40°C or higher in any case of the insert member and the mold for insert molding is as follows. Many engineering plastics have Tg higher than room temperature. Therefore, it is desired in the insert molding of the invention that the preheating temperature is 40°C or higher for both the insert member and the mold for insert molding.

In the invention, the following are considered. Where temperature of a mold having large heat capacity further rises, time until solidification of the resin becomes long, and even if resin crack does not occur, molding time becomes long, resulting in reduction of productivity. Further, in a method of preheating the inside of a mold with a gas or a liquid, the insert member and the mold cannot separately be preheated to the individually predetermined temperature, and further, both the insert member and the mold have a special form or structure, resulting in increasing costs.

From this finding, it is considered in the invention to conduct the molding by preheating the insert member under the condition of a temperature in a range of more preferably from 60°C to (melt injection temperature of resin - 10°C), and further preferably from 80°C to (melt injection temperature of resin - 20°C).

The preheating of the insert member may be that the previously heated member is paced on a predetermined position in a mold, and the temperature thereof reaches a predetermined temperature, or the member is placed in a mold, and preheated with a method such as electromagnetic induction heating, thereby reaching the predetermined temperature.

On the other hand, with respect to the preheating of the mold, it is considered to preheat under the condition of a temperature in a range of more preferably from 60°C to (melt injection temperature of resin - 65°C), and further preferably from 70°C to (melt injection temperature of resin - 80°C).

In either case, the mold may be covered with a heat insulating layer, or may be constituted of plural molds having plural temperatures controlled by plural heating mechanisms.

It is preferable in the invention that the resin used for coating the insert member is molded under the same conditions as in the case of the general injection molding that a resin previously heated and vacuum dried is heated to a melting temperature appropriate to the kind of a resin in a cylinder, and melted to impart fluidity, and then injected into a mold under a predetermined pressure.

Such a resin is not particularly limited in its kind and composition so long as it is a thermoplastic polymer. Examples of the resin include homopolymers such as a polyolefin, a vinyl polymer, a polyacetal, an aliphatic polyamide, an aromatic polyamide, an aliphatic polyester, an aromatic polyester, a polysulfone, a polyamideimide, a polyimide, a polyphenylene sulfide, a polyphenylene ether, a polyether ether ketone, and a polyether ketone; copolymers containing repeating structural units or chains of at least two those polymers; polymer blends that are mixtures of homopolymers or copolymers of at least two those polymers; polymer alloys, that is, modified polymers, containing at least two those incompatible homopolymers or copolymers, a compatibilizing agent, and the like; and composite materials comprising at least one of those homopolymers, copolymers or polymer alloys, as the main component, and inorganic fillers, carbon fibers, glass fibers or aramide fibers, filled therein. Above all, the preferable examples are a polyacetal, an aliphatic polyamide, an aromatic polyamide, an aliphatic polyester, an aromatic polyester, a polysulfone, a polyamideimide, a polyimide, a polyphenylene sulfide, a polyphenylene ether, those copolymers, polymer alloys (modified polymer), and composite materials.

Further, the thickness of the resin applied to the insert member is not particularly limited in thickness difference so long as it is in a range of from 5 µm to 30 mm, and the thickness of the resin may differ depending on the position of the insert member according to the use purpose of a molding.

After injecting a molten resin in the mold, it is exemplified that the holding time is in a range of from 1 second to 10 minutes, more preferably from 10 seconds to 5 minutes, and further preferably from 20 seconds to 2 minutes, under a pressure range of from 50 kgf/cm² to 500 kgf/cm².

After injecting the molten resin, a molding is held in the mold. Thereafter, the molding is taken out of the mold, and cooled to room temperature. Regarding the cooling time, it is considered to gradually cool under the condition in a range of from 1 minute to 5 hours, more preferably from 5 minutes to 4 hours, and further preferably from 10 minutes to 3 hours, thereby removing structural strain of resin of the molding.

Regarding the insert member, it is effective that at least one treatment selected from a polishing treatment, an etching treatment and a shot blast treatment is previously applied to the surface thereof to widen an effective contact area between the insert member and the resin, thereby increasing adhesive properties or close contact properties to the resin.

Further, as a surface treatment method for further enhancing an interaction between the surface of the insert member and the resin, i.e., adhesive properties and close contact properties, application of an adhesive such as a reaction type adhesive, application of a resin, such as electrostatic coating, a graft reaction treatment after imparting reactive functional groups to the member surface, and a silane-coupling treatment are exemplified. Above all, the silane-coupling treatment is preferable as a method of easily modifying the insert member surface.

Further, it is more preferable to conduct the silane-coupling treatment after the shot blast treatment of the insert member surface.

### (B) Resin Coating of Metal Gears

In the invention, the metal gears to be coated with a resin are gears for taking on transmission of power and/or transmission of an angle of rotation, used in various fields including automobile parts and electric and electronic parts, and examples thereof include metal gears such as spur gear, internal gear, rack and pinion; helical gear, double helical gear, herringbone gear, bevel gear, hypoid gear, screw gear, and worm gear; and serrations and metal splines, for transmitting power.

The site on the surface of the metal gears to be coated with a resin may be a part or the whole of plural tooth surfaces, and further may be a part or the whole of the surface other than the tooth surface.

It is preferable that the metal gears to be coated with a resin are provided with teeth mark on a part of the configuration, such as its outer periphery or inner periphery, and have a configuration having accuracy and function as gears.

Such metal gears are not particularly limited in the kind and composition of its material, and examples thereof include solids containing at least one selected from steel, iron, copper, aluminum, titanium, alloys containing those, and their composite members. Above all, steel and aluminum are exemplified as the preferable examples.

In the production of the resin-coated gears of the invention, the metal gears (insert members) are preheated to a predetermined temperature in a temperature range of from 40°C to melt injection temperature of resin, and the mold for molding is preheated to a predetermined temperature in a temperature range of from 40°C to (melt injection temperature of resin - 50°C).

The reason that the preheating temperature is 40°C or higher in either case of the metal gears and the mold for molding is as follows. At a temperature lower than that, a molten resin of high temperature is quenched under fluidized sate. As a result, the resin is solidified in a low crystalline state without relaxing the orientation structure of the resin. The structure of such a strain prevents to induce resin crack or peeling after molding.

Further, the metal gears to be coated with a resin generally have small heat capacity as compared with the mold for molding, due to difference in its size. Therefore, it is preferable that the preheating temperature of the metal gears to be coated with a resin is the melt injection temperature or lower of the resin. On the other hand, it is preferable that the preheating temperature of the mold for molding is (melt injection temperature of resin - 50°C) or lower. That is, it is preferable that the metal gears which are the insert member, and the mold for molding are preheated to the predetermined temperatures, respectively.

Further, the appropriate melting temperature of the resin for injection molding varies depending on the kind of the resin. Therefore, it is preferable that the preheating temperature ranges of the metal gears to be coated with a resin and the mold for molding are optionally determined in the above-described respective temperature ranges.

The preheating means of the metal gears is that previously preheated metal gears may be placed on a predetermined position in the mold, thereby reaching a predetermined temperature, or after placing the metal gears in the mold, the metal gears may be preheated by a method such as electromagnetic induction heating, thereby reaching a predetermined temperature.

In either case, the mold may be covered with a heat-insulating layer, or may be constituted of plural molds controlled to plural temperatures by plural heating mechanisms.

Such a rein is not particularly limited in its kind and composition so long as it is a thermoplastic polymer. Examples of the resin include homopolymers such as a polyolefin, a vinyl polymer, a polyacetal, an aliphatic polyamide, an aromatic polyamide, an aliphatic polyester, an aromatic polyester, a polysulfone, a polyamideimide, a polyimide, a polyphenylene sulfide, a polyphenylene ether, a polytetrafluoroethylene, a polyether ether ketone, and polyether ketone; copolymers containing repeating structural units or chains of at least two those polymers; polymer blends that are mixtures of homopolymers or copolymers of at least two those polymers; polymer alloys, i.e., modified polymers, containing at least two those incompatible homopolymers or copolymers, and a compatibilizing agent; and composite materials comprising at least one of those homopolymers, copolymers or polymer alloys, as the main component, inorganic fillers, fibers such as carbon fibers, glass fibers and aramide fibers, and solid lubricants such as graphite and molybdenum sulfide. Above all, the preferable examples include a polyacetal, an aliphatic polyamide, an aromatic polyamide, an aliphatic polyester, an aromatic polyester, a polysulfone, a polyamideimide, a polyimide, a polyphenylene sulfide, a polyphenylene ether, a polytetrafluoroethylene, those copolymers, polymer alloys (modified polymers) and composite materials.

Further, regarding the thickness of the resin to be applied to the metal gears, thickness difference is not particularly limited so long as the thickness is in a range of from 5 µm to 30 mm. The thickness of the resin may differ depending on the position of the metal gears according to the use purpose of the molding, and the resin can be molded at an optional thickness in each site on the surface of metal gears.

After injecting the molten resin in a mold, the holding time is exemplified to be in a range of from 1 second to 10 minutes, more preferably from 10 seconds to 5 minutes, and further preferably from 20 seconds to 2 minutes, under a pressure range of from 4.9 MPa to 49 MPa.

After injecting the molten resin, the molding is held in the mold, and thereafter the molding is taken out of the mold, and the molding is cooled to room temperature. Regarding the cooling time, it is considered to gradually cool under the condition in a range of from 1 minute to 5 hours, more preferably from 5 minutes to 4 hours, and further preferably from 10 minutes to 3 hours, thereby removing structural strain of resin of the molding.

Regarding the metal gears, at least one treatment selected from a polishing treatment, an etching treatment, a shot blast treatment, a roulette processing and a silane-coupling treatment is previously applied to the surface thereof, thereby increasing an effective contact area between the metal gears and the resin, and in addition to this, increasing adhesive properties or close contact properties between the metal gears and the resin. This is effective to prevent crack or peeling of the coating resin, and also effective to achieve high strength, high rigidity, impact resistance, fatigue resistance, wear resistance and noise reducing properties of the resin-coated metal gears.

Further, as a surface treatment method for further increase the interaction, i.e., adhesive properties and close contact properties, between the surface of the member constituting the metal gears, and the resin, application of an adhesive such as a reaction type adhesive, application of a resin, such as electrostatic coating, a graft reaction treatment after imparting reactive functional groups to the member surface, a silane-coupling treatment, and the like are exemplified. Above all, the silane-coupling treatment is preferable as a method of easily modifying the surface of the metal gears.

It is more preferable embodiment to conduct the silane-coupling treatment after the shot blast treatment of the metal gears.

The invention is described in more detail by referring to the following examples, but the invention is not limited by the examples.

### Examples

### (A) Resin Coating of Insert Member

Regarding Examples 1 to 12 and Comparative Examples 1 to 5, a molding method relating to resin coating and a performance evaluation method of an insert molding coated with a resin are described below.

### (1) Molding method

A shot blast-treated aluminum disc having a diameter of 68 mm and a thickness of 3mm, having three through-holes of a diameter of 4.1 mm at a circular position of 54 mm diameter from the center, the holes being apart 120° with each other, was used as an insert member. The shot blast treatment in this case was conducted with a gravity type Pheuma Blaster SG-6B-404, pressure: 3 kg/cm², a product of Fuji Manufacturing Co., using Fuji Glass Beads FGB80 (particle diameter range: 177 to 250 µm), a product of Fuji Manufacturing Co. The three through-holes are for mounting the insert member in a mold. Regarding the mounting of the insert member, it was designed such that four metal-made columnar pins having flat edge are provided at the side of mold in which a resin is injected, and at the time of closing the mold, each columnar pin is positioned at the three through-holes. Those four columnar pins have the embodiment of pushing the surface of the aluminum plate as the insert member. Further, four metal-made columnar pins of the same type are provided at a side of the mold facing the mold in which a resin is injected. One columnar pin which is provided at the center of the insert member has the embodiment of pushing the surface of the insert member, and other three pins have the embodiment of inserting in the three through-holes. That is, it is the embodiment that after placing the insert member having the three columnar pins inserted in the through-holes, the mold is closed. On the other hand, the inside of the mold has the structure that a heat insulating layer is formed on the surface, the inside has a cavity such that thickness of the resin to be coated is 0.5 mm, and a molten resin is injected from three injection ports provided on the same circumference (diameter: 54 mm) as the through-holes from the center of the aluminum disc. Further, the mold has the structure that a heater is provided, making it possible to vary temperature. The insert member preheated in an electric heating apparatus was placed at a predetermined position in the mold. When the surface temperature of the insert member reached a predetermined temperature, a molten resin having a predetermined temperature was injected in the mold set to a predetermined temperature under injection pressure of 1,000 kgf/cm². Thereafter, the resulting molding was held for a predetermined time under a predetermined pressure, and then taken out of the mold. The molding was gradually cooled to room temperature over a predetermined time.

### (2) Evaluation method

### Room temperature test

Five insert members were coated with a resin under one kind of molding condition. The insert members were taken out of the mold. After cooling, resin crack of the molding after allowing to stand at room temperature for 7 days or more was examined.

### Heating and cooling test

In most cases, the evaluation method of the insert molding by the conventional art employs the evaluation that resin crack does not occur at room temperature after molding. In some cases, however, the molding is used under severer conditions. Therefore, the heating and cooling test was conducted ten times under further severe conditions that four moldings obtained by the same coating method were held at -30°C for 2 hours and at 200°C for 2 hours, and again held at -30°C for 2 hours and at 200°C for 2 hours.

### Hot water test

There is the case that a molding obtained by coating the insert member with a resin is used under an environment in high temperature and high humidity atmosphere, in water, in hot water, or the like. Therefore, two moldings that did not generate resin crack in the above heating and cooling test were subjected to a hot water test of dipping in hot water of 90°C for 8 hours, that is the severe environment in the various environments.

### Peel test

Because a molding obtained by coating the insert member with a resin is used as industrial products, industrial parts, tools and the like, even if resin crack does not occur during use, there is the case that the molding receives various stresses. With respect to two moldings that did not generate resin crack in the moldings that were subjected to the above various tests, plural portions on the coating resin layer were cut with a cutter in a form of a strip having a width of 10 mm and a length of 30 mm up to a depth reaching the insert member surface layer. The resin layer at one edge of the strip-shaped test piece was peeled from the insert member. Using a tensile tester, the molding body was fixed on a predetermined position of the tester. Stress when peeling occurs by grasping the resin edge of the peeled portion, i.e., peel stress, was measured.

### Example 1

A molten NORYL GTX resin (NORYL GTX 6601, a product of GE Plastics) of 290°C was injected at a surface temperature of a shot blast-treated insert member of 230°C and a mold temperature of 80°C. Thereafter, the resin was held under a pressure of 100 kgf/cm² for 1 minute, and the resulting molding was taken out of the mold. The molding was gradually cooled to room temperature over 30 minutes. As shown in Table 1, the molding obtained did not generate cracks in the coated resin even after passing 7 days or more at room temperature. As a result of conducting the heating and cooling test, resin crack did not occur in all the moldings. Further, peel stress of the coating resin after the heating and cooling test was from 0.4 kgf/mm² to 0.7 kgf/mm². This is a value of the state that the insert member and the resin are sufficiently close-contacted, and shows that the molding obtained under this condition can use in air involving severe temperature change.

### Example 2

Molding was conducted in the same manner as in Example 1, except that the mold temperature was 140°C, the molten resin temperature was 270°C, the holding pressure was 300 kgf/cm², and the cooling time up to room temperature after taking the molding out of the mold was 1 hour. As shown in Table 1, the molding obtained did not generate cracks in the coated resin even after passing 7 days or more at room temperature. Further, resin crack did not occur in all the moldings that have been subjected to the heating and cooling test. Peel stress of the coating resin after the heating and cooling test was from 0.5 kgf/mm² to 0.7 kgf/mm². This is a value of the state that the insert member and the resin are sufficiently close-contacted, and shows that the molding obtained under this condition can use in air involving severe temperature change. The value of peel stress is superior to the case of Example 1, and it is seen that the mold temperature is more preferably 140°C than 80°C.

### Example 3

Molding was conducted in the same manner as in Example 2, except that the mold temperature was 150°C. As shown in Table 1, the molding obtained did not generate cracks in the coated resin even after passing 7 days or more at room temperature. Resin crack did not occur even in the moldings after the heating and cooling test. Further, close contact properties were substantially the same result as in Example 2. It was seen that although molding was conducted by elevating the mold temperature to a temperature 10°C higher than the case of Example 2, there was almost no difference in performance of the molding.

### Example 4

Molding was conducted in the same manner as in Example 2, except that the mold temperature was 180°C. As shown in Table 1, the molding obtained did not generate cracks in the coated resin even after passing 7 days or more at room temperature. Resin crack did not occur even in the moldings after the heating and cooling test. Further, close contact properties were substantially the same results as in Example 2 and Example 3. It was seen that although molding was conducted by elevating the mold temperature to a temperature 40°C higher than the case of Example 2, there was almost no difference in performance of the molding.

### Example 5

Molding was conducted in the same manner as in Example 3, except that the insert member temperature was 160°C. As shown in Table 1, the molding obtained did not generate cracks in the coated resin even after passing 7 days or more at room temperature. Resin crack did not occur even after the heating and cooling test. Further, close contact properties were substantially the same result as in Example 1. The molding obtained by that the mold temperature was the same as in Example 3, and the insert member temperature was 70°C lower than the case of Example 3 showed a slightly decreased peel stress. From this fact, it is said to be more preferable to set the insert member temperature higher than the mold temperature.

### Example 6

Molding was conducted in the same manner as in Example 3, except that the insert member temperature was 240°C. As shown in Table 1, the molding obtained did not generate cracks in the coated resin even after passing 7 days or more at room temperature. Resin crack did not occur even after the heating and cooling test. Further, close contact properties were substantially the same results as in Example 2 and Example 3. This result shows that it is preferable that the insert member temperature is higher than the mold temperature. That is, it is shown that the embodiment that the insert member temperature and the mold temperature can be set to separately different temperatures is the preferable molding embodiment.

### Example 7

Molding was conducted in the same manner as in Example 6, except that a compound prepared by previously melt kneading a mixture of 95 wt % of the above-described NORYL GTX resin and 5 wt % of a polytetrafluoroethylene (PTFE) powder was used as a resin material. As shown in Table 1, the molding obtained did not generate cracks in the coated resin even after passing 7 days or more at room temperature. Resin crack did not occur even after the heating and cooling test. Further, close contact properties were substantially the same result as in Example 1. The polytetrafluoroethylene itself having excellent properties in lubricating characteristics does not have adhesive properties to other material, and further do not have fluidity even in a molten state, and therefore, injection molding is difficult. However, the results of this example show that where the polytetrafluoroethylene powder was added to NORYL GTX resin in an amount of 5 wt%, insert molding is possible, and there is the possibility that lubricating properties can be imparted to the resin.

### Example 8

Molding was conducted in the same manner as in Example 7, except that a compound prepared by previously melt kneading a mixture of 90 wt% of the above-described NORYL GTX resin and 10 wt % of a polytetrafluoroethylene (PTFE) powder was used as a resin material. As shown in Table 1, the molding obtained did not generate cracks in the coated resin even after passing 7 days or more at room temperature. Resin crack did not occur even after the heating and cooling test. Further, close contact properties were substantially the same result as in Example 1. That is, this shows that a molding having 10 % of a polytetrafluoroethylene added thereto can be used in air involving severe temperature change. Further, it is generally known that a resin having 10 % of a polytetrafluoroethylene added thereto has excellent lubricating properties, and wear resistance of a matrix resin (main component) is improved. Therefore, the molding method of the invention can provide a molding having excellent lubricating properties and wear resistance.

### Comparative Example 1

Molding was conducted in the same manner as in Example 1, except that the insert member temperature was room temperature (20°C). As shown in Table 1, in all of five moldings, resin crack occurred at the time of taking out of the mold after molding. It is said that this result reproduced the fact that resin crack was liable to occur in a molding in the prior art, and proves the characteristic of the invention in the embodiment of separately preheating the insert member and the mold, and molding as shown in Examples 1 to 8.

### Comparative Example 2

Molding was conducted in the same manner as in Example 1, except that the mold temperature was room temperature (20°C). As shown in Table 1, in all of five moldings, resin crack occurred at the time of taking out of the mold after molding. This result shows that similar to Comparative Example 1 above, a molding having no resin crack cannot be produced by a molding method in the embodiment of preheating either one of the insert member and the mold.

### Comparative Example 3

Molding was conducted in the same manner as in Example 3, and just after taking the molding from the mold, the molding was introduced into water of 10°C to quench. As a result, resin crack occurred. This result shows that, for example, in the case that the insert member and mold temperatures are 100°C higher than room temperature in an insert molding of a heat-resistant resin, the coated resin is apparently solidified, but the polymer chain in the resin does not form a stable structure. Therefore, it is shown that the gradual cooling step after taking the molding from the mold is one of the important embodiments in the insert molding method in reducing structural strain of an amorphous polymer or proceeding a secondary crystallization of a crystalline polymer in the slow cooling step. Time required for the gradual cooling step is at most about 1 hour, and if within several hours, it does not disturb productivity of a molding.

### Example 9

A shot blast-treated insert member was preheated to 260°C to 270°C, and an ethanol solution of a silane-coupling agent (KBP40, a product of Shin-Etsu Chemical Co.). At the time that the insert member temperature reached 230°C, molding was conducted in the same manner as in Example 3. As shown in Table 1, the molding obtained did not generate cracks in the coated resin even after passing 7 days or more at room temperature. Resin crack did not occur even after the heating and cooling test. On the other hand, peel stress after the heating and cooling test was 0.9 kgf/mm² to 1.1 kgf/mm². This is a value of two times the case of Example 3, and it is seen that close contact properties or adhesive properties were improved. This result proves that use of the shot blast treatment and the silane-coupling treatment in combination is more preferable embodiment.

### Example 10

Molding was conducted in the same manner as in Example 9, except that a compound prepared by previously melt kneading a mixture of 90 wt% of NORYL GTX resin and 10 wt% of a polytetrafluoroethylene powder was used as a resin material. As shown in Table 1, the molding obtained did not generate cracks in the coated resin even after passing 7 days or more at room temperature. Resin crack did not occur even after the heating and cooling test. On the other hand, peel stress after the heating and cooling test was 0.6 kgf/mm² to 0.8 kgf/mm². This is a value of two times the case of Example 8, and it is seen that close contact properties or adhesive properties were improved. This result proves that even to a heat-resistant resin containing a fluorine resin, use of the shot blast treatment and the silane-coupling treatment in combination is more preferable embodiment.

### Example 11

The molding obtained in Example 9 was subjected to the hot water test of dipping in hot water of 90°C for 8 hours. As a result, resin crack and also apparent peeling did not occur. Further, as a result of measurement of close contact properties, peel stress was 0.8 kgf/mm² to 0.9 kgf/mm². This result proves that the embodiment of using the shot blast treatment and the silane-coupling treatment in combination enables the heat-resistant resin-coated insert molding to stably use not only in air having a wide temperature range, but under an aqueous environment such as hot water.

### Example 12

The molding obtained in Example 10 was subjected to the hot water test of dipping in hot water of 90°C for 8 hours. As a result, resin crack and also apparent peeling did not occur. Further, as a result of measurement of close contact properties, peel stress was 0.5 kgf/mm² to 0.7 kgf/mm². This result proves that the embodiment of using the shot blast treatment and the silane-coupling treatment in combination enables the insert molding coated with the heat-resistant resin containing the fluorine resin to stably use not only in air having a wide temperature range, but under an aqueous environment such as hot water.

### Comparative Example 4

The molding obtained in Example 3 was subjected to the hot water test of dipping in hot water of 90°C for 8 hours. As a result, resin crack did not occur. However, peel stress was 0.05 kgf/mm² to 0.1 kgf/mm². This result was the result of examination of close contact properties and adhesive properties in hot water of the resin-coated molding using the insert member having been not subjected to the silane-coupling treatment, and shows that the molding wherein the insert member is not surface-treated with the silane-coupling or the like can be used in air atmosphere, but it is preferable to not use in severer environment such as hot water.

### Comparative Example 5

The molding obtained in Example 8 was subjected to the hot water test of dipping in hot water of 90°C for 8 hours. As a result, resin crack did not occur. However, peel stress was 0.03 kgf/mm² to 0.07 kgf/mm². This result shows that even in the heat-resistant resin containing a fluorine resin, the molding wherein the insert member is not surface-treated with the silane-coupling or the like can be used in air atmosphere, but it is preferable to not use in severer environment such as hot water.

The results of Examples 1 to 12 and Comparative Examples 1 to 5 are shown in Table 1 below.

**Table 1**

| | Resin | Molten resin temperature (°C) | Insert member temperature (°C) | Mold temperature (°C) | Cooling Time (min) | Resin crack test | | Peel stress 1 (kgf/mm²) | Peel stress 2 (kgf/mm²) |
|---|---|---|---|---|---|---|---|---|---|
| | | | | | | Room temperature After 7 days | -30°C to 200°C | | |
| Example 1 | A | 290 | 230 | 80 | 30 | o | o | 0.4-0.7 | - |
| Example 2 | A | 270 | 230 | 140 | 60 | o | o | 0.5-0.7 | - |
| Example 3 | A | 270 | 230 | 150 | 60 | o | o | 0.5-0.7 | - |
| Example 4 | A | 270 | 230 | 180 | 60 | o | o | 0.5-0.7 | - |
| Example 5 | A | 270 | 160 | 150 | 60 | o | o | 0.5-0.7 | - |
| Example 6 | A | 270 | 240 | 150 | 60 | o | o | 0.5-0.7 | - |
| Example 7 | B | 270 | 240 | 150 | 60 | o | o | 0.4-0.7 | - |
| Example 8 | C | 270 | 240 | 150 | 60 | o | o | 0.4-0.7 | - |
| Example 9 | A | 270 | 230 | 150 | 60 | o | o | 0.9-1.1 | - |
| Example 10 | C | 270 | 230 | 150 | 60 | o | o | 0.6-0.8 | - |
| Example 11 | A | 270 | 230 | 150 | 60 | o | o | 0.9-1.1 | 0.8-0.9 |
| Example 12 | C | 270 | 230 | 150 | 60 | o | o | 0.6-0.8 | 0.5-0.7 |
| Comparative Example 1 | A | 290 | 20 | 80 | 30 | × | - | - | - |
| Comparative Example 2 | A | 290 | 230 | 20 | 30 | × | - | - | - |
| Comparative Example 3 | A | 270 | 230 | 150 | Quenched with water | × | - | - | - |
| Comparative Example 4 | A | 270 | 230 | 150 | 60 | o | o | 0.5-0.7 | 0.05-0.1 |
| Comparative Example 5 | C | 270 | 240 | 150 | 60 | o | o | 0.4-0.7 | 0.03-0.07 |

| | | | | | | | | | |
|---|---|---|---|---|---|---|---|---|---|
| 1) Resin A: NORYL GTX, Resin B: NORYL GTX 95 wt%/PTFE 5 wt%, Resin C: NORYL GTX 90 wt%/PTFE 10 wt% | | | | | | | | | |
| 2) Injection pressure is all 1,000 kgf/cm². Holding time is that only Example 1 is 100 kgf/cm², and other examples are 300 kgf/cm². Holding time is 1 minute | | | | | | | | | |
| 3) Peel stress 1 is a value after heating and cooling test. Peel stress 2 is a value after hot water test. | | | | | | | | | |
| 4) Examples 11 and 12 are that an insert member is subjected to a silane-coupling treatment. | | | | | | | | | |

As shown in Table 1, each molding method of Examples 1 to 8 was excellent in production of the molding that does not generate resin crack over a wide temperature range in air. Further, it was excellent in imparting characteristics possessed by the resin to the insert member surface. Contrary to this, each molding method of Comparative Examples 1 to 3 was poor in molding properties.

Further, where the insert member surface was subjected to the silane-coupling treatment as in each molding method of Examples 9 and 10, it was ascertained that close contact properties or adhesive properties are further increased. Further, it was ascertained that in the case of not conducting the silane-coupling treatment as in Comparative Examples 4 and 5, peel strength in hot water greatly deteriorate, whereas in the case of the silane-coupling treatment, the molding method of the insert molding that can be used even in hot water is achieved.

As described in detail above, according to the invention, the insert molding method that has high general-purpose properties and does not generate resin crack in a wide temperature range can be provided.

In particular, where the insert member surface is subjected to the silane-coupling treatment, close contact properties and adhesive properties between the insert member and the coating resin are greatly improved, the synergistic effect of further increasing performance of the molding is developed, and further excellent insert molding having high general-purpose properties can easily and inexpensively be produced, which is advantageous.

### (B) Resin Coating of Metal Gears

### (1) Molding

### Example 13

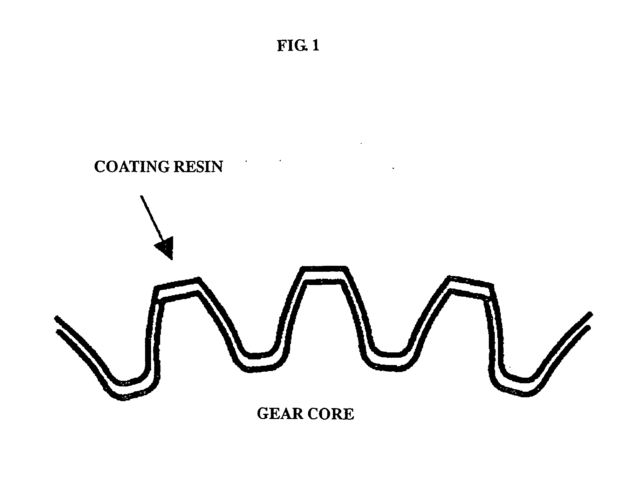

One example of coating a gear portion on the outer periphery of a metal gear with a resin by the resin coating method of the invention is described. The resin-coated metal gear of the invention is shown in Fig. 1. The gear after resin coating had a standard full depth tooth (accuracy: four class), a module of 2, a pressure angle of 20°, a teeth number of 32, and a diameter of standard pitch circle of 64 mm. To produce the resin-coated gear of the invention, a shot blast treatment was applied to a metal gear made of S45C with a gravity type Pheuma Blaster SG-6B-404, a product of Fuji Manufacturing Co., under the condition of a pressure of 0.294 MPa using Fuji Glass Beads FGB80 (particle diameter range: 177 to 250 µm), a product of Fuji Manufacturing Co.

A mold had the following structure. Temperature is variable by the equipment of a heater. The outer surface is surrounded with a heat-insulating layer. The interior is provided with an axial for fitting the metal gear, making it possible to place the metal gear at a fixed position, and also is provided with a cavity having a thickness of 0.2 mm corresponding to a thickness of a resin coated. The outer cavity surface of the metal gear placed on the fixed position is provided with three injection ports toward the center of the metal gear, and a resin is injection molded.

The S45C-made metal gear was preheated to 260 to 270°C in a nitrogen-filled electric heating apparatus, and its surface was coated with an ethanol solution of a silane-coupling agent, KBP40, a product of Shin-Etsu Chemical Co. At the time that the metal gear reached 230°C, the metal gear was placed at a predetermined position in the mold set to 150°C, and a molten NORYL GTX resin (a product of GE Plastics; a polyphenylene ether is a disperse phase, and nylon is a matrix phase) of 270°C was injected under an injection pressure of 98 MPa, followed by holding under a pressure of 29.4 MPa for 1 minute. The resulting molding was taken out of the mold, and gradually cooled to room temperature over 30 minutes.

### Example 14

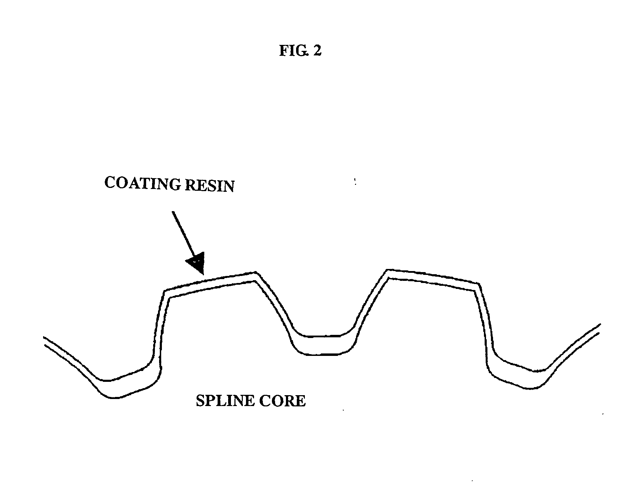

A resin-coated metal spline (Fig. 2) was produced by conducting the resin coating in the same manner as in Example 13, except that S45C-made metal spline was selected as metal gears to be coated with a resin, the surface of the tooth (axis) on the outer periphery of its inner driver is a site to be coated with a resin, and a thickness of the resin was 0.3 mm. The inner driver after resin coating had the same teeth mark (low teeth) as an automobile involute spline, a module of 3.0, a pressure angle of 20°, a teeth number of 18, a diameter of standard pitch circle of 54 mm, and an addendum modification coefficient of +0.8.

### 2. Test evaluation

### (1) Room temperature test

The resin-coated metal gear molded in Example 13 was taken out of the mold, and cooled, and its surface was observed while maintaining at room temperature. As a result, it was confirmed that resin crack or peeling did not occur in the resin applied to the tooth surface even after passing 7 days or more.

Further, the resin-coated metal spline (inner driver) molded in Example 14 was taken out of the mold, and cooled, and its surface was observed while maintaining at room temperature. As a result, it was confirmed that resin crack or peeling did not occur in the resin applied to the tooth surface even after passing 7 days or more.

### (2) Heating and cooling test

Assuming that a product having a resin-coated metal gear incorporated therein receives temperature variation during operation, the resin-coated gear molded in Example 13 was subjected to 10 cycles of the heating and cooling test under severe conditions of holding at -30°C for 2 hours and 200°C for 2 hours in air, and again holding at -30°C for 2 hours and 200°C for 2 hours, in air. As a result, it was confirmed that resin crack or peeling did not occur in the resin applied to the tooth surface.

The same heating and cooling test was applied to the resin-coated metal spline molded in Example 14. As a result, it was confirmed that resin crack or peeling did not occur in the resin applied to the tooth surface.

### (3) Hot water test

As the environment at practical use of a resin-coated metal gear, there is the case that the gear is used under environment in high temperature and high humidity atmosphere, in water, in hot water, and the like. Therefore, the resin-coated metal gear molded in Example 13 and the resin-coated metal gear after the heating and cooling test were subjected to a hot water test of dipping in hot water of 90°C for 8 hours. As a result, it was confirmed in each case that resin crack or peeling did not occur in the resin applied to the tooth surface.

The resin-coated metal spline molded in Example 14 and the resin-coated metal spline after the heating and cooling test were subjected to the same hot water test as above. As a result, it was confirmed in each case that resin crack or peeling did not occur in the resin applied to the tooth surface.

### Example 15

The coating resin layer of the resin-coated metal gear molded in the same manner as in Example 13 was cut from the surface of the tooth. A part thereof (thin piece) was dyed with ruthenium tetraoxide, and embedded in an epoxy resin, followed by trimming with a stainless knife. Surface exposure was conducted with a glass knife, and the exposed surface was again dyed with ruthenium tetraoxide. This was mounted on an ultramicrotome device, a product of Reichert, and cut with a diamond knife to prepare an ultrathin cut piece having a thickness of about 70 nm. This ultrathin cut piece was examined with JEM-1200EX transmission electron microscope (TEM), a product of JEOL Ltd., to observe a microstructure of a molding in an accelerating voltage of 80 kV.

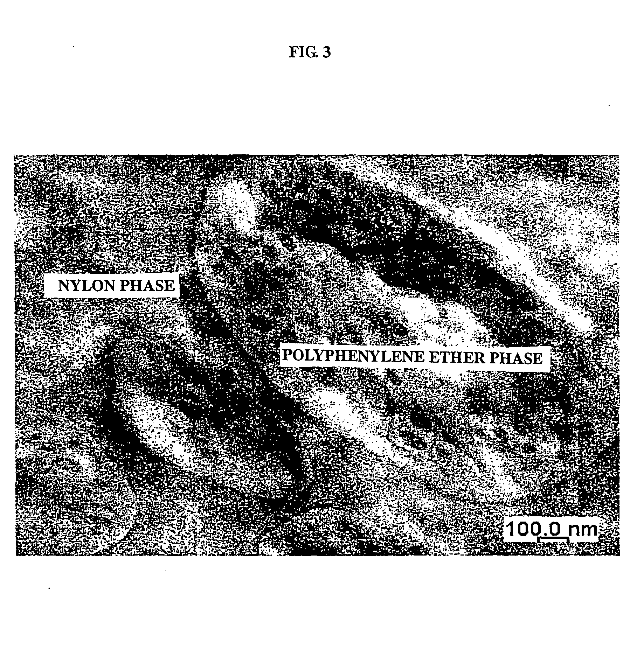

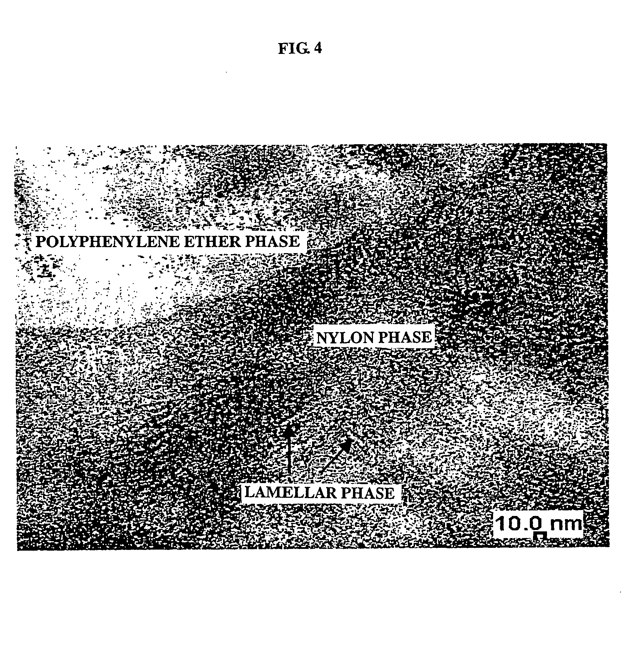

Fig. 3 shows TEM photograph of a microstructure of the coating resin layer. This TEM photograph is a pattern of the microstructure that a polyphenylene phase is dispersed in a matrix phase of nylon. In TEM photograph of high magnification (Fig. 4), lamellar crystals of nylon that is a crystalline polymer are observed in the matrix phase, and lamellar crystals were not observed in a disperse phase of a polyphenylene ether that is an amorphous polymer.

It is seen from TEM photograph of Fig. 3 that despite that a resin is injected from a molten state of high temperature, a disperse phase is almost spherical form. This clearly shows that the coating resin after molding was not solidified while maintaining an oriented state, but was solidified in a state that orientation of the resin was sufficiently relaxed. This shows that non-orientation is observed with respect to the lamellar crystals of nylon (bright stripe-like form having a width of about 5 nm shown by arrow in Fig. 4), and a surface of metal gears can be coated with a resin in substantially non-oriented state, that is, in a non-strain structure, by the molding method of the invention. This structure supports that resin crack did not occur after molding, and further, resin crack or peeling did not occur even in the hot water test, as described before.

The same TEM image as in Fig. 3 and Fig. 4 was observed in the coating resin layer of the resin-coated metal spline (inner driver) molded in the same manner as in Example 14. From this fact, it is concluded that the molding method of the invention is the technique that can widely be applied to metal gears.

### Example 16

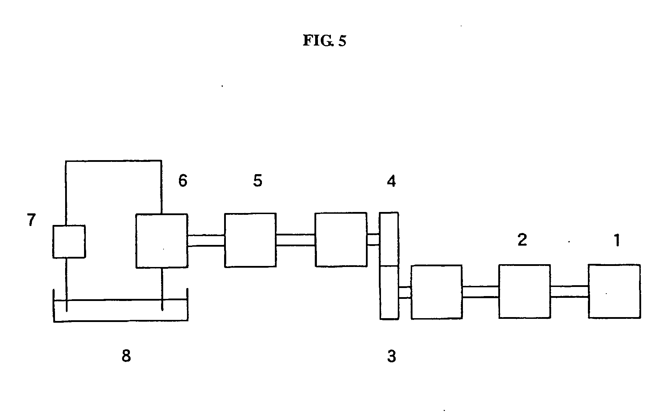

Using the gear test apparatus shown in Fig. 5, performance test of the resin-coated metal gear (driving gear) was conducted. The numerical signs in the drawings are as follows.
1: Motor
2: Torque meter
3: Driving gear
4: Driven gear
5: Torque meter
6: Gear pump
7: Relief valve
8: Hydraulic oil tank

That is, Non-resin-coated S45C-made metal gear (driven gear) was selected as a counter gear to be intermeshed. This gear and the resin-coated metal gear molded in the same manner as in Example 1 were incorporated in a gear test apparatus. Gears were rotated under the condition of a load torque of 12 Nm, a number of revolution of 1,200 rpm, an atmosphere temperature of 25°C and non-lubrication to conduct a performance test of the resin-coated metal gear.

As a result, it was confirmed that the resin-coated metal gear after operation of the total number of revolution of 10⁷ did not substantially have damage, destruction of tooth root did not occur at all, and high strength, high rigidity, impact resistance and fatigue resistance possessed by the metal gear were reflected. Further, crack or peeling did not occur in the resin layer coated on the tooth surface, wear of the resin surface was slight, and there was no remarkable change in the thickness of resin. From those facts, it was confirmed that wear resistance was also excellent. This is the performance which was not obtained by the combination of two resin gears, or the combination of the resin gear and the metal gear.

Further, simultaneous with the performance test, a noise measurement was conducted by setting up a noise meter LA-5120, a product of Ono Sokki Co., at a distance of 200 mm apart from the intermeshing point vertically upper in the axial direction. On the other hand, a noise measurement was conducted under the same conditions by rotating the driving gear and the driven gear that were non-resin coated gears for a short period of time under a liquid paraffin lubrication. As a result, in the combination of the resin-coated metal gear of the invention and S45C-made metal gear, noise decreased about 6 dB as compared with the combination of two metal gears, and it was confirmed that the resin-coated metal gear is excellent in low noise properties.

### Example 17

The resin-coated inner driver prepared in the manner as in Example 14 was incorporated in a negative actuation brake comprising S45C-made spline (non-resin-coated spline) intermeshing the driver, and a field core, 10⁵ cycle actuation was conducted with one cycle being a load of rotating at a number of revolution of 1,000 rpm with an inertia moment of 0.9 kgm² corresponding to a real machine for 10 seconds, braking at 0.5 second, and stopping for 30 seconds.

As a result, crack or peeling did not occur at all on the resin on the surface of the resin-coated metal spline (inner driver) even after 10⁵ cycle actuation. Further, damage, deformation and wear were not substantially observed on the resin surface. It was confirmed that in addition to high strength, high rigidity, impact resistance and fatigue resistance possessed by the metal spline, wear resistance possessed by a resin was reflected.

Further, simultaneous with the performance test of spline, a noise measurement was conducted by setting up a noise meter LA-5120, a product of Ono Sokki Co., at a distance of 100 mm apart from the intermeshing point vertically upper in the axial direction. On the other hand, a noise measurement was conducted under the same conditions by rotating the inner driver and the intermeshing spline that were non-resin coated S45C-made metal splines for a short period of time under a non-lubrication. As a result, in the case of using the resin-coated metal spline of the invention, noise decreased 3 to 10 dB as compared with the combination of two non-resin-coated metal splines, and it was confirmed that the resin-coated metal spline is excellent in low noise properties.

### Industrial Applicability

As described in detail above, the insert molding method of the invention is excellent in the production of a molding that can be used under various severe conditions, and has high environmental resistance characteristics, and therefore is advantageous for applications to many material fields.

That is, the method enables to coat an insert member with a resin, that was not difficult to prevent resin crack or peeling of a molding in the prior art, and has extremely high applications as that functions such as impact resistance, lubricating properties, chemical resistance, and heat-insulating properties possessed by a resin can be added to the mechanical and dynamic functions of metal parts, ceramic parts and composite material parts in agricultural field, civil engineering and building fields, and medical-related fields, without being limited to the fields of automotive parts and electric and electronic parts.

As described above, the invention is provided on the basis of a quite novel finding by the present inventors on the resin coating of an insert member.

That is, as described before, the present inventors have made intensive investigations on a resin coating method of an insert member by injecting a molten resin, and as a result, have found that a molding method of separately controlling an insert member and a mold to each predetermined temperature, or a method of previously surface-treating the insert member is a remarkably excellent molding method for obtaining a molding having high adhesive properties between an insert product and a resin without generation of resin crack, as compared with a method of preheating those to the same temperature. The invention has been completed based on this finding.

For example, in the case that an insert member is placed on a mold, it is tried to inject and mold an engineering resin having an appropriate molten resin temperature in a general injection molding of 270 to 310°C, an insert member of an aluminum plate (diameter: 68 mm, thickness: 5 mm) generates resin crack just after molding when the temperature of both the insert member and the mold are room temperature. Further, even though the insert member is preheated to a temperature of 230°C, when the mold temperature is room temperature, resin crack occurs just after molding. On the other hand, even though the insert member temperature is room temperature and the mold is preheated to a temperature of 80°C, resin crack occurs just after molding. Further, even though the insert member temperature is room temperature and the mold temperature is preheated to 150°C, resin crack occurs just after molding. On the other hand, contrary to those methods, according to the invention as described above, the insert member and the mold are separately preheated to the respective predetermined temperature, and after injecting a molten resin under a predetermined pressure, pressure in the mold is held for a predetermined period of time, and a molding is taken out of the mold. In the case of gradually cooling to room temperature, polymer chain oriented in the mold is relaxed. Further, crystallization of a polymer proceeds, forming a stable structure having less inner strain of the coating resin. Consequently, this is extremely excellent as a molding method.

Further, the invention provides a method of coating the surface of metal gears with a resin, and resin-coated gears by the method. Such resin-coated gears do not generate crack, peeling or the like of the coating resin even after molding or during use, and in addition, have a wide utilization value as gears excellent in high strength, high rigidity, impact resistance, fatigue resistance, wear resistance, durability and noise reducing properties.

Thus, the resin-coated metal gears can achieve high performance and reduced size, so that high performance or reduced size of a product for transmitting power having incorporated therein the resin-coated metal gears of the invention can be achieved, and applications are very high.

## Claims

1. A resin coating method of an inert member which is a method of applying a resin to an insert member surface by insert molding, the method comprising a preheating step of heating the insert member to a predetermined temperature within a range of from 40°C to a melt injection temperature of the resin and a mold for insert molding to a predetermined temperature within a range of from 40°C to (melt injection temperature of the resin - 50°C); an insert molding step of injecting a molten resin in a state that the preheated insert member is positioned in the preheated mold for insert molding; a holding step of holding a molding in the mold; and a cooling step of taking the insert molding out of the mold, and gradually cooling the same to room temperature.

2. The resin coating method as claimed in claim 1, wherein the insert member is at least one selected from metals, ceramics or their composite members.

3. The resin coating method as claimed in claim 1 or 2, wherein the resin is a thermoplastic resin, and is at least one selected from the group of a homopolymer, a copolymer, a polymer blend, a polymer alloy, and a composite material comprising a polymer as a main component.

4. The resin coating method as claimed in any one of claims 1 to 3, wherein the resin applied to the surface of the insert member has a thickness in a range of from 5 µm to 30 mm.

5. The resin coating method as claimed in any one of claims 1 to 4, wherein the insert member is previously surface-treated with at least one selected from a polishing treatment, an etching treatment, a shot blast treatment and a silane-coupling treatment.

6. An insert molding which is a molding obtained by the resin coating method as claimed in any one of claims 1 to 5, wherein the molding does not generate resin crack in an air atmosphere of a temperature range of from -40°C to 200°C.

7. An insert molding which is a molding obtained by the resin coating method as claimed in any one of claims 1 to 5, wherein the molding does not generate resin crack or resin peeling in water of a temperature range of from 0°C to 100°C.

8. A resin coating method of metal gears which is a method of applying a resin to a surface of the metal gears, the method comprising a preheating step of heating the metal gears to a predetermined temperature within a range of from 40°C to a melt injection temperature of the resin and a mold for molding to a predetermined temperature within a range of from 40°C to (melt injection temperature of the resin - 50°C); a molding step of injecting a molten resin in a state that the preheated metal gears are positioned in the preheated mold; a holding step of holding a molding in the mold; and a cooling step of taking the molding out of the mold, and gradually cooling the same to room temperature.

9. The resin coating method of metal gears as claimed in claim 8, wherein the metal gears are a metal gear for transmitting power and/or angle of rotation, or metal splines and serration, for transmitting power.

10. The resin coating method as claimed in claim 8 or 9, wherein the metal gears are at least one selected from steel, iron, copper, aluminum, titanium, or alloys containing those, or their composite members.

11. The resin coating method as claimed in any one of claims 8 to 10, wherein the resin is a thermoplastic resin, and is at least one selected from the group of a homopolymer, a copolymer, a polymer blend, a polymer alloy, and a composite material comprising a polymer as a main component.

12. The resin coating method as claimed in any one of claims 8 to 11, wherein the resin applied to the surface of the insert member has a thickness in a range of from 5 µm to 30 mm, and can be molded in an optional thickness at each site of gear surface.

13. The resin coating method as claimed in any one of claims 8 to 12, wherein the metal gears are previously surface-treated with at least one selected from a polishing treatment, an etching treatment, a shot blast treatment, a roulette processing and a silane-coupling treatment.

14. Resin-coated metal gears which are a molding obtained by the resin coating method as claimed in any one of claims 8 to 13, wherein the molding is free from orientation of resin after molding, and has suppressed resin crack and resin peeling.

15. Resin-coated metal gears comprising two gears constituting a pair of gears that transmit power and/or angle of rotation by contact rotating tooth portions thereof, wherein all tooth surfaces of the two gears comprise a molding obtained by the resin coating method as claimed in any one of claims 8 to 13, or all tooth surfaces (tooth contact sites) of one gear comprises a molding obtained by the resin coating method as claimed in any one of claims 8 to 13, and another gear intermeshing with the one gear is a non-resin-coated metal gear.

16. Resin-coated metal gears obtained by the resin coating method as claimed in any one of claims 8 to 13, wherein when a part of tooth surface is coated with a resin, tooth surface of another gear contacting and intermeshing with non-resin-coated tooth surface of the gear is coated with a resin.

17. Resin-coated metal gears obtained by the resin coating method as claimed in any one of claims 8 to 13, having impact resistance far superior to that of a resin-made gear.

18. Resin-coated metal gears obtained by the resin coating method as claimed in any one of claims 8 to 13, having fatigue resistance far superior to that of a resin-made gear.

19. Resin-coated metal gears obtained by the resin coating method as claimed in any one of claims 8 to 13, having lubricating properties and wear resistance far superior to those of a combination of two metal gears when used under non-lubrication in the combination of gears as claimed in claim 15 or 16.

20. Resin-coated metal gears obtained by the resin coating method as claimed in any one of claims 8 to 13, having excellent noise reducing properties such that noises due to contact of the gears at the tooth surface thereof is greatly reduced than noises due to contact of metal gears at the tooth surface thereof, in the case of using in the combination of gears as claimed in claim 15 or 16.
